# EUROPEAN PATENT SPECIFICATION

(11) **EP 4 017 220 B1**
(45) Date of publication and mention of the grant of the patent: **15.04.2026**
(21) Application number: 20215861.4
(22) Date of filing: 21.12.2020
(51) Int. Cl.: H05B 47/115, H05B 47/175

(54) **SENSOR-BASED AGGREGATION OF PRESENCE INFORMATION**
SENSORBASIERTE AGGREGATION VON ANWESENHEITSINFORMATIONEN
AGRÉGATION D'INFORMATIONS DE PRÉSENCE À BASE DE CAPTEUR

(43) Date of publication of application: 22.06.2022
(73) Proprietor: Zumtobel Lighting GmbH, 6850 Dornbirn (AT)
(72) Inventor: Fink, Jürgen, 6850 Dornbirn (AT)
(74) Representative: Rupp, Christian

(56) References cited:
- EP-A1- 3 681 251
- WO-A1-2017/076680
- US-A1- 2018 195 706

## Description

### Technical Field

The present invention relates to lighting technology, and in particular to a sensor module for a lighting system, a corresponding lighting system, a method of operating the sensor module, and a processing means for the sensor module.

### Background Art

In lighting systems, presence or motion sensors are used to sense a presence of persons within a sensing zone of the sensor, and to actuate a relay to turn on a load, such as a luminaire illuminating the sensing zone.

Such an actuation may also be initiated by a remote controller of the lighting systems, to which the sensor reports whenever it senses a presence of persons within its sensing zone. Typically, the communication with the remote controller may be realized via a Digital Addressable Lighting Interface (DALI) communication bus. Due to energy-saving measures such building automation busses typically have a limited traffic capacity.

Similar consideration apply for new technologies like Narrowband Internet of Things (NB-IoT). Typically, IoT applications collect sensor information for processing in the cloud.

Similarly, the presence of persons may be reported to the remote controller in order to provide several new digital service applications like Desk Management. For example, cleaning of office workspace may be guided based on information such as a daily occupancy time per desk. A plurality of sensors within the workspace may consistently report any presence of persons in their respective sensing zone to the remote controller upon sensing, so that the remote controller may then calculate the daily occupancy time per desk. This may result in heavy traffic on the communication bus when a plurality of sensors steadily reports movement data. In view of the limited traffic capacity of the communication bus, a proper operation of the lighting systems may be at risk.

US 2018/195706 A1 discloses an occupancy-sensing lighting control system in which occupancy sensing units detect presence/motion and transmit occupancy sensing data to a central engine (harvesting/lighting engine) where the received time-stamped data are aggregated and analysed for lighting-control purposes (e.g. adapting timeout/threshold behaviour). EP 3 681 251 A1 provides a method for controlling a light output from a luminaire based at least in part on a sensor signal from a motion sensor arranged to observe movement in a space illuminated by the luminaire.

### Summary of the Invention

The object of the present invention is thus to reduce an amount of traffic provided by presence or motion sensors of a lighting system in support of new digital service applications.

The invention is defined by the appended independent claims. Preferred embodiments are set forth in the dependent claims and in the following description and drawings.

According to a first aspect, a sensor module for a lighting system is provided. The sensor module comprises sensing means and processing means. The sensing means are configured to sense a presence of a person within a sensing zone at a time instant, wherein the time instant falls within a corresponding unit time period of a time grid. The processing means is configured to aggregate those of the plurality of unit time periods in which the sensing means senses the presence of the person. The sensor module further comprises communication means configured to communicate with a remote controller for the sensing means. The communication means are configured to submit the aggregated unit time periods to the remote controller on a regular basis or in accordance with a readout by the remote controller.

The sensing means comprise a motion sensor.

The processing means comprise a counter configured for aggregating those of the plurality of unit time periods in which the sensing means senses the presence of the person.

The unit time period may relate to a second, a minute, and/or an hour.

The communication means may be configured to report the aggregated unit time periods to the controller in accordance with a timing of a clock of the sensor module.

The timing of the clock of the sensor module may relate relating to an hourly, daily or weekly reporting period.

The communication means may be configured to report the aggregated unit time periods to the controller in accordance with the readout by the controller.

The communication means may comprise means for wireless communication.

The communication means may comprise means for wired communication, in particular a DALI interface connectable to a DALI bus.

The processing means may further be configured to trigger, via the communication means, an activation of acoustic and/or lighting means for a time period, wherein the acoustic and/or lighting means may be arranged within the sensing zone of the sensor module.

The aggregated unit time periods may comprise an occupancy time of the sensing zone of the sensor module.

The activation of the lighting means may comprise activating a dimming level above a first dimming level if the occupancy time exceeds an occupancy time threshold.

The activation of the lighting means may comprise activating a dimming level below a second dimming level if the occupancy time fails to exceed the occupancy time threshold.

At least one of the levels and thresholds may be configurable via input means of the sensor module or, via the communication means, by the controller.

According to a second aspect, a lighting system is provided. The lighting system comprises a sensor module of the first aspect or any of its embodiments; and lighting means arranged in a sensing zone of the sensor module.

According to a third aspect, a method of operating a sensor module is provided. The method comprises: sensing a presence of a person within a sensing zone at a time instant, wherein the time instant falls within a corresponding unit time period of a time grid; and aggregating those of the plurality of unit time periods in which the presence of the person is sensed; using a motion sensor for sensing the presence of the person within the sensing zone in dependence on a motion within the sensing zone; providing communication means configured to communicate with a remote controller for the sensing means; providing a counter configured for aggregating those of the plurality of unit time periods in which the sensing means senses the presence of the person, and the communication means submitting the aggregated unit time periods to the remote controller on a regular basis or in accordance with a readout of the remote controller.

The method may be performed by the sensor module of the first aspect or any of its embodiments.

According to a fourth aspect, a processing means for a sensor module is provided. The processing means is designed for implementing the method of the third aspect or any of its embodiments.

### Advantageous Effects of the Invention

The present disclosure foresees that information relevant for new digital service applications is aggregated/calculated inside the sensor module, rather than reporting motion to the remote controller whenever it is detected. The aggregated information may then be submitted to or retrieved by the remote controller on a regular basis.

This may reduce an amount of traffic reported by presence or motion sensors of a lighting system in support of new digital service applications, and may further allow for a deployment of a slow but cost-efficient and energy-saving bus system such as DALI.

### Brief Description of the Drawings

Further aspects, advantages and objects of the invention will become evident for the skilled reader by means of the following detailed description of the embodiments of the invention, when taking into conjunction with the figures of the enclosed drawings.
Fig. 1 illustrates a sensor module in a lighting system according to an embodiment of the present disclosure; and
Fig. 2 illustrates a method of operating a sensor module according to an embodiment of the present disclosure.

### Detailed Descriptions of Embodiments

The invention will now be described with respect to various embodiments. The features of these embodiments may be combined with each other unless specified otherwise.

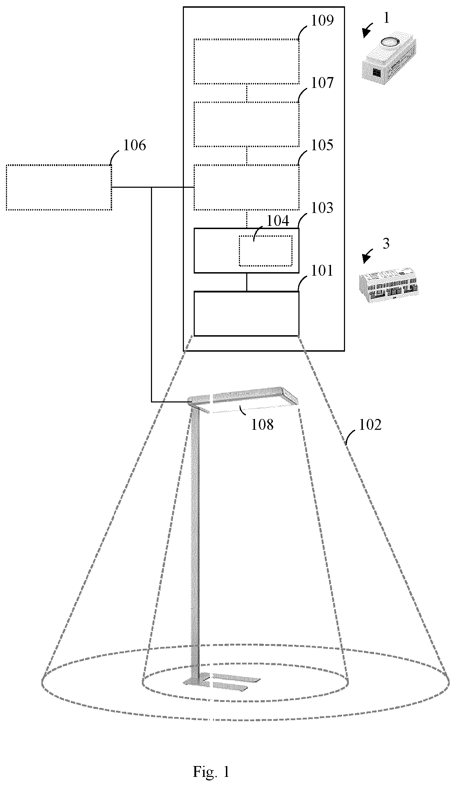

Fig. 1 illustrates a sensor module 1 in a lighting system 3 according to an embodiment of the present disclosure.

The lighting system 3 comprises the sensor module 1 and lighting means 108 arranged in a sensing zone 102 of the sensor module 1. In the example of Fig. 1, the lighting means 108 comprises a freestanding luminaire.

The sensor module 1 may be a separate component of the lighting system 3 or be integrated in the lighting means 108, such that the sensing zone 102 of the sensor module 1 comprises an illumination zone of the lighting means 108.

The sensor module 1 comprises sensing means 101 and processing means 103.

The sensing means 101 may comprise a presence sensor, a motion sensor or the like, irrespective of the underlying detection principle (such as pyroelectric effect, reflection of radar waves etc.).

The sensing means 101 is configured to sense a presence of a person within a sensing zone 102 at a time instant. This time instant falls within a corresponding unit time period of a time grid. The unit time period may relate to a second, a minute, and/or an hour. For example, whenever the presence of the person is sensed within the sensing zone 102, the corresponding second, minute, and/or hour of the time grid is identified accordingly.

Those skilled in the art will appreciate that depending on a motion within the sensing zone 102, the sensing means 101 may sense the presence of the person, or a non-presence of the person.

The processing means 103 may comprise a microcontroller, a microprocessor, a field-programmable gate array (FPGA), an application-specific integrated circuit (ASIC) or the like.

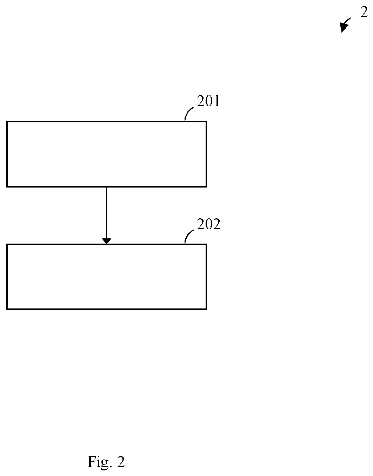

The processing means 103 may be designed for implementing the method 2 explained in more detail in connection with Fig. 2.

The processing means 103 is configured to aggregate those of the plurality of unit time periods in which the sensing means 101 senses the presence of the person. To this end, the processing means 103 may comprise a counter 104 configured for aggregating those of the plurality of unit time periods in which the sensing means 101 senses the presence of the person. In accordance with the previous example, those of the plurality of seconds in which the sensing means 101 senses the presence of the person may be aggregated by incrementing the counter 104 accordingly, so that the counter 104 has a value corresponding to the quantity of seconds in which the sensing means 101 sensed the presence of the person, since the counter 104 has been set to zero.

In particular, the aggregated unit time periods may comprise an occupancy time of the sensing zone 102 of the sensor module 1. In accordance with the previous example, if the sensing zone 102 of the sensor module 1 comprises a desk, the occupancy time of the desk amounts to the quantity of seconds in which the sensing means 101 sensed the presence of the person.

Based on presence information aggregated inside the sensor module 1, an amount of traffic reported by the sensor module 1 in support of new digital service applications may be reduced. In turn, this may further allow for a deployment of a slow but cost-efficient and energy-saving bus system such as DALI, as will be discussed next.

The sensor module 1 may further comprise communication means 105 configured to communicate with a remote controller 106 for the sensing means 101.

The communication means 105 may comprise wireless communication. Alternatively, the communication means 105 may comprise wired communication, in particular a DALI interface connectable to a DALI bus.

The communication means 105 may be configured to report the aggregated unit time periods to the controller 106 in accordance with a timing of a clock 107 of the sensor module 1. Meanwhile, the timing of the clock 107 of the sensor module 1 may relate to an hourly, daily or weekly reporting period. In accordance with the previous example, the sensor module 1 may be configured to *proactively* report the aggregated plurality of seconds in which the sensing means 101 sensed the presence of the person to the controller 106.

Alternatively or additively, the communication means 105 may be configured to report the aggregated unit time periods to the controller 106 in accordance with a readout by the controller 106. In other words, the remote controller 106 may retrieve the aggregated plurality of seconds according to its own reporting schedule, so that the sensor module 1 in this case is configured to *reactively* report the aggregated plurality of seconds.

In other words, the aggregated information may be submitted to or retrieved by the remote controller 106 on a regular basis.

The processing means 103 may further configured to trigger, via the communication means 105, an activation of acoustic means and/or the lighting means 108 for a time period. The acoustic and/or lighting means 108 may be arranged within the sensing zone 102 of the sensor module 1.

The activation of the lighting means 108 may comprise activating a dimming level above a first dimming level if the occupancy time exceeds an occupancy time threshold. Alternatively or additionally, the activation of the lighting means 108 may comprise activating a dimming level below a second dimming level if the occupancy time fails to exceed the occupancy time threshold. **In** accordance with the previous example and given an occupancy time threshold of 5h per day, a dimming level of the corresponding lighting means 108 may be set to 100% if the occupancy time, i.e., the aggregated quantity of seconds in which the sensing means 101 sensed the presence of the person, amounts to more than these 5h, and otherwise to a dimming level of 10%, for example.

At least one of the levels and thresholds may be configurable via input means 109 of the sensor module 1, such as pushbuttons, or, via the communication means 105, by the controller 106 or a remote control for the sensor module 1.

Fig. 2 illustrates a method 2 of operating a sensor module 1 according to an embodiment of the present disclosure.

The method 2 comprises sensing 201 and aggregating 202 steps.

Step 201 involves sensing a presence of a person within a sensing zone at a time instant, wherein the time instant falls within a corresponding unit time period of a time grid.

Step 202 involves aggregating those of the plurality of unit time periods in which the presence of the person is sensed.

The method 2 may be performed by a sensor module 1 of the first aspect of the present disclosure or any of its embodiments.

Accordingly, the technical effects and advantages mentioned in connection with the sensor module 1 similarly apply for the method 2 of operating the same.

## Claims

1. A sensor module (1) for a lighting system (3), comprising
sensing means (101) configured to sense a presence of a person within a sensing zone (102) at a time instant, the time instant falling within a corresponding unit time period of a time grid, wherein the sensing means (101) comprises a motion sensor and wherein the sensing means is configured to sense the presence of the person within the sensing zone (102) in dependence on a motion within the sensing zone;
processing means (103) configured to aggregate those of the plurality of unit time periods in which the sensing means (101) senses the presence of the person; and
communication means (105) configured to communicate with a remote controller (106) for the sensing means (101), and
**characterized in that**
the processing means (103) comprises a counter (104) configured for aggregating those of the plurality of unit time periods in which the sensing means (101) senses the presence of the person,
the communication means (105) are configured, to submit the aggregated unit time periods to the remote controller (106) on a regular basis or in accordance with a readout by the remote controller (106).

2. The sensor module (1) of claim 1,
the unit time period relating to a second, a minute, and/or an hour.

3. The sensor module (1) of claim 1,
the communication means (105) being configured to report the aggregated unit time periods to the controller (106) in accordance with a timing of a clock (107) of the sensor module (1).

4. The sensor module (1) of claim 3,
the timing of the clock (107) of the sensor module (1) relating to an hourly, daily or weekly reporting period.

5. The sensor module (1) of claim 1,
the communication means (105) being configured to report the aggregated unit time periods to the controller (106) in accordance with the readout by the controller (106).

6. The sensor module (1) of any of the claims 1 to 5,
the communication means (105) comprising means for wireless communication.

7. The sensor module (1) of any of the claims 1 to 5,
the communication means (105) comprising means for wired communication, in particular a DALI interface connectable to a DALI bus.

8. The sensor module (1) of any of the claims 1 to 7,
the processing means (103) being further configured to trigger, via the communication means (105), an activation of acoustic and/or lighting means (108) for a time period, the acoustic and/or lighting means (108) arranged within the sensing zone (102) of the sensor module (1).

9. The sensor module (1) of claim 8,
wherein the processing means (103) are configured to trigger, via the communication means, the activation of the lighting means (108) for the time period,
the aggregated unit time periods comprising an occupancy time of the sensing zone (102) of the sensor module (1).

10. The sensor module (1) of claim 9,
the activation of the lighting means (108) comprising activating a dimming level above a first dimming level if the occupancy time exceeds an occupancy time threshold.

11. The sensor module (1) of claim 9 or claim 10,
the activation of the lighting means (108) comprising activating a dimming level below a second dimming level if the occupancy time fails to exceed the occupancy time threshold.

12. The sensor module (1) of claim 10 or claim 11,
at least one of the levels and thresholds being configurable via input means (109) of the sensor module (1) or, via the communication means (105), by the controller (106).

13. A lighting system (3), comprising
the sensor module (1) of any of the claims 1 to 12; and
lighting means (108) arranged in the sensing zone (102) of the sensor module (1).

14. A method (2) of operating a sensor module (1), comprising
sensing (201) a presence of a person within a sensing zone at a time instant, the time instant falling within a corresponding unit time period of a time grid;
aggregating (202) those of the plurality of unit time periods in which the presence of the person is sensed;
using a motion sensor for sensing the presence of the person within the sensing zone (102) in dependence on a motion within the sensing zone; and
providing communication means (105) configured to communicate with a remote controller (106) for the sensing means (101),
**characterized by**
providing a counter (104) configured for aggregating those of the plurality of unit time periods in which the sensing means (101) senses the presence of the person, and
the communication means (105) submitting the aggregated unit time periods to the remote controller on a regular basis or in accordance with a readout of the remote controller (106).

15. The method (2) of claim 14,
wherein the method (2) is performed by the sensor module (1) of any of the claims 1 to 12.

## Patentansprüche

1. **Sensormodul (1) für ein Beleuchtungssystem (3), umfassend:**
- **ein Sensormittel (101),** das dazu eingerichtet ist, zu einem Zeitpunkt, der in eine entsprechende **Einheitszeitperiode** eines **Zeitrasters** fällt, eine **Anwesenheit einer Person** innerhalb eines **Erfassungsbereichs (102)** zu erfassen, **wobei** das Sensormittel (101) **einen Bewegungssensor umfasst** und **wobei** das Sensormittel (101) abhängig von einer **Bewegung** innerhalb des Erfassungsbereichs (102) dazu eingerichtet ist, die Anwesenheit der Person innerhalb des Erfassungsbereichs (102) zu erfassen;
- **ein Verarbeitungsmittel (103),** das dazu eingerichtet ist, diejenigen aus der Vielzahl von Einheitszeitperioden zu **aggregieren,** in denen das Sensormittel (101) die Anwesenheit der Person erfasst; und
- **ein Kommunikationsmittel (105),** das dazu eingerichtet ist, mit einem **Steuergerät (106)** für das Sensormittel (101) zu kommunizieren,
**dadurch gekennzeichnet, dass** das Verarbeitungsmittel (103) **einen Zähler (104) umfasst,** der dazu eingerichtet ist, diejenigen aus der Vielzahl von Einheitszeitperioden zu aggregieren, in denen das Sensormittel (101) die Anwesenheit der Person erfasst, und dass das Kommunikationsmittel (105) dazu eingerichtet ist, die **aggregierten Einheitszeitperioden regelmäßig** oder **entsprechend einem Auslesen** durch das Steuergerät (106) an das Steuergerät (106) **zu übermitteln.**

2. **Sensormodul (1) nach Anspruch 1,** wobei es sich bei der Einheitszeitperiode um **eine Sekunde, eine Minute und/oder eine Stunde** handelt.

3. **Sensormodul (1) nach Anspruch 1,** wobei das Kommunikationsmittel (105) eingerichtet ist, die aggregierten Einheitszeitperioden **gemäß der Taktung einer Uhr (107)** des Sensormoduls (1) an das Steuergerät (106) zu übermitteln.

4. **Sensormodul (1) nach Anspruch 3,** wobei die Taktung der Uhr (107) des Sensormoduls (1) **stündlich, täglich oder wöchentlich** erfolgt.

5. **Sensormodul (1) nach Anspruch 1,** wobei das Kommunikationsmittel (105) eingerichtet ist, die aggregierten Einheitszeitperioden **je nach Auslesen** durch das Steuergerät (106) an dieses **zu melden.**

6. **Sensormodul (1) nach einem der Ansprüche 1 bis 5,** wobei das Kommunikationsmittel (105) **Mittel zur drahtlosen Kommunikation umfasst.**

7. **Sensormodul (1) nach einem der Ansprüche 1 bis 5,** wobei das Kommunikationsmittel (105) **Mittel für eine kabelgebundene Kommunikation umfasst,** insbesondere **eine DALI-Schnittstelle, die an einen DALI-Bus anschließbar ist.**

8. **Sensormodul (1) nach einem der Ansprüche 1 bis 7,** wobei das Verarbeitungsmittel (103) ferner dazu eingerichtet ist, über das Kommunikationsmittel (105) eine **Aktivierung von akustischen und/oder Beleuchtungsmitteln (108)** für eine Zeitdauer auszulösen, **wobei** die akustischen und/oder Beleuchtungsmittel (108) innerhalb des Erfassungsbereichs (102) des Sensormoduls (1) angeordnet **sind.**

9. **Sensormodul (1) nach Anspruch 8,** wobei das Verarbeitungsmittel (103) dazu eingerichtet ist, über das Kommunikationsmittel (105) die **Aktivierung des Beleuchtungsmittels (108)** für die Zeitdauer auszulösen, **wobei** die aggregierten Einheitszeitperioden eine **Belegungszeit** des Erfassungsbereichs (102) des Sensormoduls (1) umfassen.

10. **Sensormodul (1) nach Anspruch 9,** wobei die Aktivierung des Beleuchtungsmittels (108) umfasst, einen **Dimmpegel über einem ersten Dimmpegel** zu aktivieren, falls die Belegungszeit einen **Belegungszeitschwellenwert** überschreitet.

11. **Sensormodul (1) nach Anspruch 9 oder 10,** wobei die Aktivierung des Beleuchtungsmittels (108) umfasst, einen **Dimmpegel unter einem zweiten Dimmpegel** zu aktivieren, falls die Belegungszeit den Belegungszeitschwellenwert **nicht überschreitet.**

12. **Sensormodul (1) nach Anspruch 10 oder 11,** wobei **mindestens einer der** Pegel oder **Schwellenwerte** über **ein Eingabemittel (109)** des Sensormoduls (1) oder - über das Kommunikationsmittel (105) - durch das Steuergerät (106) **konfigurierbar** ist.

13. **Beleuchtungssystem (3), umfassend:**
- das Sensormodul (1) nach einem der Ansprüche 1 bis 12; und
- **Beleuchtungsmittel (108), das** innerhalb des Erfassungsbereichs (102) des Sensormoduls (1) angeordnet ist.

14. **Verfahren (2) zum Betreiben eines Sensormoduls (1), umfassend:**
- **Erfassen (201)** einer Anwesenheit einer Person innerhalb eines Erfassungsbereichs zu einem **Zeitpunkt, wobei** der Zeitpunkt in eine entsprechende **Einheitszeitperiode** eines Zeitrasters fällt;
- **Aggregieren (202)** derjenigen aus der Vielzahl von Einheitszeitperioden, in denen die Anwesenheit der Person erfasst wird;
- **Verwenden eines Bewegungssensors** zum Erfassen der Anwesenheit der Person innerhalb des Erfassungsbereichs (102) **in Abhängigkeit von einer Bewegung** innerhalb des Erfassungsbereichs; und
- **Bereitstellen eines Kommunikationsmittels (105),** das dazu eingerichtet ist, mit einem Steuergerät (106) für das Sensormittel (101) zu kommunizieren,
**dadurch gekennzeichnet, dass** ein **Zähler (104)** bereitgestellt wird, der dazu eingerichtet ist, diejenigen aus der Vielzahl von Einheitszeitperioden zu aggregieren, in denen das Sensormittel (101) die Anwesenheit der Person erfasst, **und dass** das Kommunikationsmittel (105) die **aggregierten Einheitszeitperioden regelmäßig** oder **gemäß einer Abfrage** des Steuergeräts (106) an das Steuergerät (106) **übermittelt.**

15. **Verfahren (2) nach Anspruch 14,** bei dem das Verfahren (2) durch das Sensormodul (1) nach einem der Ansprüche 1 bis 12 **durchgeführt wird.**

## Revendications

1. **Module capteur (1) pour un système d'éclairage (3), comprenant** :
- **un moyen de détection (101)** configuré pour détecter la présence d'une personne dans une **zone de détection (102)** à un instant donné, **cet instant appartenant à une période unitaire correspondante** d'une grille temporelle, **ledit moyen de détection (101) comprenant un capteur de mouvement et étant configuré pour détecter** la présence de la personne dans la zone de détection (102) **en fonction d'un mouvement** à l'intérieur de ladite zone de détection;
- **un moyen de traitement (103)** configuré pour **agréger** celles des multiples périodes unitaires pendant lesquelles le moyen de détection (101) détecte la présence de la personne; et
- **un moyen de communication (105)** configuré pour communiquer avec une **unité de commande (106)** associée audit moyen de détection (101),
**caractérisé en ce que** le moyen de traitement (103) **comprend un compteur (104)** configuré pour agréger celles des multiples périodes unitaires pendant lesquelles le moyen de détection (101) détecte la présence de la personne, et **en ce que** le moyen de communication (105) **est configuré** pour transmettre les **périodes unitaires agrégées** à l'unité de commande (106) **à intervalles réguliers ou conformément à une interrogation** par ladite unité de commande (106).

2. **Module capteur (1) selon la revendication 1,** dans lequel la période unitaire correspond à **une seconde, une minute et/ou une heure.**

3. **Module capteur (1) selon la revendication 1,** dans lequel le moyen de communication (105) est configuré pour rapporter les périodes unitaires agrégées à l'unité de commande (106) **selon la synchronisation d'une horloge (107)** dudit module capteur (1).

4. **Module capteur (1) selon la revendication 3,** dans lequel la synchronisation de l'horloge (107) du module capteur (1) correspond à une périodicité de **transmission horaire, quotidienne ou hebdomadaire.**

5. **Module capteur (1) selon la revendication 1,** dans lequel le moyen de communication (105) est configuré pour rapporter les périodes unitaires agrégées à l'unité de commande (106) **en fonction d'une interrogation** par ladite unité de commande (106).

6. **Module capteur (1) selon l'une des revendications 1 à 5,** dans lequel le moyen de communication (105) **comprend des moyens de communication sans fil.**

7. **Module capteur (1) selon l'une des revendications 1 à 5,** dans lequel le moyen de communication (105) **comprend des moyens de communication filaire,** en particulier **une interface DALI pouvant être connectée** à un bus DALI.

8. **Module capteur (1) selon l'une des revendications** 1 à **7,** dans lequel le moyen de traitement (103) est en outre configuré pour déclencher, par l'intermédiaire du moyen de communication (105), une activation de **moyens acoustiques et/ou d'éclairage (108)** pendant une durée déterminée, **lesdits moyens acoustiques et/ou d'éclairage (108) étant disposés** dans la zone de détection (102) du module capteur (1).

9. **Module capteur (1) selon la revendication 8,** dans lequel le moyen de traitement (103) est configuré pour déclencher, par l'intermédiaire du moyen de communication (105), **l'activation du moyen d'éclairage (108)** pendant ladite durée, **les périodes unitaires agrégées comprenant une durée d'occupation** de la zone de détection (102) dudit module capteur (1).

10. **Module capteur (1) selon la revendication 9,** dans lequel l'activation du moyen d'éclairage (108) comprend l'activation d'un **niveau de gradation supérieur à un premier niveau de gradation** si la durée d'occupation dépasse un **seuil de durée d'occupation** prédéfini.

11. **Module capteur (1) selon la revendication 9 ou 10,** dans lequel l'activation du moyen d'éclairage (108) comprend l'activation d'un **niveau de gradation inférieur à un deuxième niveau de gradation** si la durée d'occupation **n'atteint pas** le seuil de durée d'occupation.

12. **Module capteur (1) selon la revendication 10 ou 11,** dans lequel **au moins l'un desdits niveaux ou seuils** est configurable par le biais du **moyen d'entrée (109)** du module capteur (1) ou, via le moyen de communication (105), par l'unité de commande (106).

13. **Système d'éclairage (3), comprenant** :
- le module capteur (1) selon l'une des revendications 1 à 12; et
- **un moyen d'éclairage (108)** disposé dans la zone de détection (102) dudit module capteur (1).

14. **Procédé (2) de fonctionnement d'un module capteur (1), comprenant** :
- la **détection (201)** de la présence d'une personne dans une zone de détection à un **instant donné, cet instant se situant dans une période unitaire correspondante** d'une grille temporelle;
- **l'agrégation (202)** de celles des multiples périodes unitaires pendant lesquelles la présence de la personne est détectée;
- **l'utilisation d'un capteur de mouvement** pour détecter la présence de la personne dans la zone de détection (102) **en fonction d'un mouvement** à l'intérieur de la zone de détection; et
- **la fourniture d'un moyen de communication (105)** configuré pour communiquer avec une unité de commande (106) associée audit moyen de détection (101), **caractérisé en ce que** l'on prévoit **un compteur (104)** configuré pour agréger celles des multiples périodes unitaires pendant lesquelles le moyen de détection (101) détecte la présence de la personne, **et en ce que** le moyen de communication (105) **transmet** les périodes unitaires agrégées à l'unité de commande à **intervalles réguliers ou sur interrogation** de ladite unité de commande (106).

15. **Procédé (2) selon la revendication 14,** dans lequel ledit procédé (2) est mis en œuvre par le module capteur (1) selon l'une des revendications 1 à 12.
